# EUROPÄISCHE PATENTSCHRIFT

(11) **EP 2 358 579 B1**
(45) Veröffentlichungstag und Bekanntmachung des Hinweises auf die Patenterteilung: **18.06.2014**
(21) Anmeldenummer: 09806000.7
(22) Anmeldetag: 17.12.2009
(51) Int. Cl.: B62D 33/06, B60G 99/00

(54) **AUFHÄNGUNGSEINRICHTUNG MIT WANKKOMPENSATION**
SUSPENSION DEVICE HAVING ANTI-ROLL COMPENSATION
DISPOSITIF DE SUSPENSION À COMPENSATION DE ROULIS

(30) Priorität: 19.12.2008 DE 102008063812
(43) Veröffentlichungstag der Anmeldung: 24.08.2011
(73) Patentinhaber: ZF Friedrichshafen AG, 88038 Friedrichshafen (DE)
(72) Erfinder: EISMANN, Jens, 49326 Melle (DE); QUAING, Matthias, 49152 Bad Essen (DE); BUHL, Manfred, 49143 Bissendorf (DE); LANGHORST, Friedhelm, 49356 Diepholz (DE); LAHMANN, Kerstin, 49163 Bohmte (DE); LORENZ, Karl, 01968 Grosskoschen (DE)
(86) Internationale Anmeldenummer: PCT/DE2009/050074
(87) Internationale Veröffentlichungsnummer: WO 2010/069305

(56) Entgegenhaltungen:
- DE-A1- 4 210 132
- DE-A1-102005 043 998
- US-A1- 2005 274 557

## Beschreibung

Die Erfindung betrifft eine Aufhängungseinrichtung zur federnden bzw. stoßdämpfenden Aufhängung eines Massekörpers, beispielsweise einer Lkw-Fahrerkabine, gemäß dem Oberbegriff des Patentanspruchs 1.

Aufhängungseinrichtungen der eingangs genannten Art kommen beispielsweise, jedoch keineswegs ausschließlich, bei Lastkraftwagen, landwirtschaftlichen Fahrzeugen oder Schwerlastfahrzeugen zum Einsatz, um die jeweilige Fahrerkabine bezüglich Schwingungen und Bewegungen vom Fahrzeugchassis möglichst weitgehend zu entkoppeln.

Da bei Schwerlastfahrzeugen die Feder- und Dämpferraten der Feder/Dämpfereinheiten des Fahrwerks aufgrund erheblicher Fahrzeuggewichte sowie aufgrund der hohen ungefederten Massen im Fahrwerk unvermeidlich hoch gewählt werden müssen, werden Fahrbahnunebenheiten oder auch Schwingungen aus Achsen und Antriebsstrang zunächst oft noch zu einem erheblichen Teil noch über die Achsfederung auf das Chassis und von dort auch auf die Fahrerkabine übertragen.

Um im Sinne der Ergonomie und des Arbeitsschutzes für den Fahrer die Übertragung derartiger Stöße und Vibrationen auf das Fahrerhaus und somit auf den Arbeitsplatz des Fahrers zu minimieren, sind Fahrerhausaufhängungen entwickelt worden, bei denen das Fahrerhaus bzw. die Fahrerkabine unter Verwendung eines eigenen Aufhängungssystems am Fahrzeugchassis abgestützt ist. Solche Aufhängungssysteme für die Fahrerkabine können dank der im Vergleich zum Fahrzeug viel geringeren Masse der Fahrerkabine mit niedrigeren Federraten als die Achsaufhängung ausgelegt werden, weshalb dann Fahrbahnunebenheiten bzw. aus Antriebsstrang oder Achsen des Fahrzeugs stammende Schwingungen dank solcher vergleichsweise weicher Kabinen-Aufhängungssysteme deutlich besser vom Arbeitsplatz des Fahrers isoliert werden können.

Um bei gattungsgemäßen elastischen Kabinen-Aufhängungsvorrichtungen unerwünschte seitliche Bewegungen oder auch Wanken der Fahrerkabine relativ zum Fahrzeugchassis einzuschränken - beispielsweise bei Schräg- oder Kurvenfahrt, aber auch beispielsweise im Fall einseitiger Fahrbahnunebenheiten - sind Aufhängungsvorrichtungen entwickelt worden, bei denen zwischen der Fahrerkabine und dem Chassis eine Wattgestängeeinrichtung angeordnet ist. Je nach Ihrer Ausführung sorgt die Wattgestängeeinrichtung dabei dafür, dass seitliche Bewegungen der Fahrzeugkabine gegenüber dem Chassis unterbunden werden, bzw. dafür, dass Einfederungsbewegungen der Kabine relativ zum Chassis im Wesentlichen linear erfolgen, dass also die Bewegungsfreiheitsgrade zwischen Kabine und Chassis mittels der Wattgestängeeinrichtung auf eine insbesondere vertikale Einfederungsbewegung reduziert werden.

Eine derartige Aufhängungsvorrichtung ist beispielsweise aus der DE 10 2005 043 998 A1 bekannt. Diese bekannte Aufhängungsvorrichtung umfasst je nach Ausführungsform eines oder mehrere Watt'sche Gestänge, die dafür sorgen, dass die Bewegungsfreiheitsgrade der Kabine gegenüber dem Chassis beispielsweise eines Lkw auf eine lediglich vertikale Bewegung reduziert werden, bzw. dafür, dass relative Wankbewegungen der Kabine gegenüber dem Chassis unterbunden werden. Gleichzeitig sind lineare Einfederungsbewegungen zwischen Kabine und Chassis entlang der Hochachse - innerhalb des Kabinen-Federwegs - weiterhin uneingeschränkt möglich.

Die überwiegend feste Kopplung bezüglich der Wankbewegungen zwischen Kabine und Chassis bei dieser bekannten Aufhängungsvorrichtung bietet zwar den Vorteil, dass insbesondere eigenständige Wankbewegungen der Kabine relativ zum Chassis unterbunden werden können. Andererseits führt dies jedoch auch dazu, dass das Fahrerhaus jeder vom Chassis ausgehenden Wankanregung unweigerlich folgt. Dabei ist der Wankwinkel des Fahrerhauses zumindest gleich groß, oft jedoch - aufgrund der Elastizitäten in der Fahrerhausbefestigung und in den Wattgestängen - sogar größer als der Winkel der vom Chassis ausgehenden Wankanregung.

Bei Kurvenfahrt, Schrägfahrt oder im Fall einseitiger Fahrbahnunebenheiten kann dies jedoch dazu führen, dass sich das Fahrerhaus zumindest genauso stark oder sogar stärker neigt als das Fahrzeugchassis. Aus Komfort- und Sicherheitsgründen wäre es jedoch wünschenswert, seitliche Neigungen des Fahrerhauses bei allen Fahrbedingungen zu unterbinden oder zumindest zu reduzieren. Ferner wäre es dem Komfort des Fahrers auch sehr dienlich, wenn sich - beispielsweise beim Parken eines Lkw quer zu einem Gefälle - die Übertragung der Schrägstellung des Chassis auf die Fahrerkabine unterbinden oder reduzieren lassen würde.

Aus der EP 2 291309 AO, bei der es sich um einen Stand der Technik gemäß Art. 54 (3) EPÜ handelt, ist eine Aufhängungseinrichtung mit aktivem Wattgestänge bekannt.

Diese Lösung bezieht sich auf längenveränderbare Lenker von Wattgestängen, deren Längenänderung mittels eines Aktuators erfolgt.

Mit diesem Hintergrund ist es Aufgabe der vorliegenden Erfindung, eine Aufhängungseinrichtung zur federnden Aufhängung eines Massekörpers relativ zu einem Unterbau zu schaffen, insbesondere zur Aufhängung einer Fahrzeugkabine bei einem Lastkraftwagen, mit der sich die genannten Nachteile des Standes der Technik überwinden lassen. Insbesondere soll es die Aufhängungseinrichtung dabei ermöglichen, unerwünschte Wankbewegungen des Massekörpers bzw. der Fahrzeugkabine auch im Falle von Wankanregungen oder Schrägstellungen des Unterbaus bzw. des Chassis zu unterbinden oder zu kompensieren.

Diese Aufgabe wird durch eine Aufhängungseinrichtung mit den Merkmalen des Patentanspruchs 1 gelöst. Bevorzugte Ausführungsformen sind Gegenstand der Unteransprüche.

Die erfindungsgemäße Aufhängungseinrichtung dient in an sich bekannter Weise zunächst einmal der federnden Aufhängung eines Massekörpers relativ zu einem Unterbau, also beispielsweise der Aufhängung der Fahrerkabine eines Lastkraftwagens gegenüber dem Fahrzeugchassis.

In an sich ebenfalls bekannter Weise umfasst die Aufhängungseinrichtung eine zwischen Massekörper und Unterbau angeordnete Feder-/Dämpfer-Anordnung zur Dämpfung von Stößen bzw. Schwingungen, sowie ferner eine Wattgestängeanordnung mit zumindest einem den Massekörper und den Unterbau relativbeweglich verbindenden Watt'schen Gestänge. Das zumindest eine Watt'sche Gestänge dient dabei der Reduktion der Bewegungsfreiheitsgrade des Massekörpers gegenüber dem Unterbau, beispielsweise der im Wesentlichen linearen Führung des Massekörpers bzw. der Kabine entlang der (vertikalen) Hauptstoßrichtung des Unterbaus bzw. Chassis.

Erfindungsgemäß zeichnet sich die Aufhängungseinrichtung jedoch dadurch aus, dass zumindest einer der Anlenkpunkte des Wattgestänges relativbeweglich mit dem Massekörper bzw. dem Unterbau verbunden ist. Dabei ist die Relativposition zwischen dem Anlenkpunkt des Wattgestänges und dem Massekörper bzw. Unterbau mittels zumindest eines im Wesentlichen linear wirkenden zwischen Anlenkpunkt und Massekörper bzw. Unterbau angeordneten Aktuators verstellbar, wobei die Querschubstreben längenkonstant ausgebildet sind.

Durch die erfindungsgemäße Veränderbarkeit der Relativposition zwischen dem Anlenkpunkt des Wattgestänges und dem Massekörper bzw. dem Unterbau wird ermöglicht, dass unerwünschtem Wanken des Massekörpers gegenüber dem Unterbau - also beispielsweise unerwünschten seitlichen Neigungen der Fahrerkabine eines Lastkraftwagens - insbesondere aktiv entgegengewirkt werden kann, indem der Anlenkpunkt des Wattgestänges - relativ zu seiner Verbindung mit dem Massekörper bzw. mit dem Unterbau - mittels des Aktuators verschoben wird.

Dies bedeutet mit anderen Worten, dass der Wankwinkel zwischen dem Massekörper und dem Unterbau, also beispielsweise zwischen der Fahrerkabine und dem Chassis eines Lastkraftwagens, auf diese Weise insbesondere aktiv verändert werden kann, um somit, zum Beispiel im Falle von seitlichen Chassisneigungen, dennoch die horizontale Positionierung der Fahrerkabine aufrechtzuerhalten, oder zumindest die seitliche Neigung der Fahrerkabine kleiner zu halten als diejenige des Chassis.

Die Erfindung lässt sich dabei zunächst einmal unabhängig davon verwirklichen, wie der Aktuator konstruktiv ausgebildet und an das zumindest eine Watt'sche Gestänge angebunden ist, solange eine Längenveränderung des Aktuators zu einer Veränderung des Wankwinkels des Massekörpers bzw. der Kabine relativ zum Unterbau führt.

Gemäß einer bevorzugten Ausführungsform der Erfindung ist der zumindest eine Aktuator jedoch mittels eines im Wesentlichen senkrecht zur Wirkungsrichtung des Aktuators angeordneten Hebelarms an den zumindest einen Anlenkpunkt des Wattgestänges angebunden. Vorzugsweise verläuft dabei die Wirkungsrichtung des Aktuators im Wesentlichen senkrecht zur Geradführungsrichtung des zumindest einen Wattgestänges.

Auf diese Weise kann - in Abhängigkeit von der Länge des Hebelarms - ein Drehmoment zwischen dem Anlenkpunkt des Wattgestänges, an welchem der Aktuator angreift, und dem Massekörper bzw. der Kabine erzeugt werden. Mittels dieses durch den Aktuator aufgebrachten Drehmoments kann unerwünschten Wankbewegungen der Kabine somit insbesondere aktiv entgegengewirkt werden.

Diese Ausführungsform lässt sich beispielsweise auch dann zur Wankstabilisierung einsetzen, wenn die Wattgestängeanordnung der Aufhängungseinrichtung lediglich eines und nicht mehrere Watt'sche Gestänge umfasst. Hierbei dient das eine Wattgestänge dann insbesondere der Unterbindung von seitlichen (translatorischen) Bewegungen des Massekörpers bzw. der Kabine relativ zum Unterbau. Der über einen Hebelarm angebundene Aktuator kann in diesem Fall sowohl zur aktiven Wankstabilisierung als auch zu annähernden Parallelführung des Massekörpers bzw. der Kabine entlang der Bewegungsrichtung der federnden Aufhängung herangezogen werden.

Gemäß einer weiteren bevorzugten Ausführungsform der Erfindung ist zumindest ein Anlenkpunkt der Wattgestängeanordnung elastisch mit dem Massekörper bzw. mit dem Unterbau verbunden. Dabei ist der zumindest eine Aktuator - in Bezug auf seine effektive Längenveränderung - zwischen dem Anlenkpunkt und dem Massekörper, bzw. zwischen dem Anlenkpunkt und dem Unterbau angeordnet. Dies bedeutet mit anderen Worten, dass durch eine Längenveränderung des Aktuators die Position des Anlenkpunkts zwischen dem Wattgestänge und dem Massekörper, bzw. des Anlenkpunkts zwischen dem Wattgestänge und dem Unterbau, verstellt werden kann, indem durch den Aktuator die elastische Verbindung dieses Anlenkpunkts - bei der es sich insbesondere um ein Elastomerlager handeln kann - verformt wird.

Bei dieser Ausführungsform ergeben sich gleichzeitig auch Notlaufeigenschaften der Aufhängungseinrichtung bei einem etwaigen Ausfall des Aktuators. In einem solchen Fall kehrt nämlich die elastische Anbindung des aktuatorisch vorstellbaren Anlenkpunkts, mit dem das Wattgestänge an die Kabine bzw. den Unterbau angebunden ist, aufgrund ihrer Federkräfte selbsttätig in die Mittelstellung zurück.

Gemäß einer weiteren bevorzugten Ausführungsform der Erfindung weist die elastische Verbindung zwischen dem mit dem Aktuator verbundenen Anlenkpunkt des Wattgestänges und dem Massekörper bzw. dem Unterbau unterschiedliche Federkonstanten in zumindest zwei unterschiedliche Raumrichtungen auf. Hierdurch lassen sich voneinander unabhängige, unterschiedliche Federraten für unterschiedliche Funktionen des Wattgestänges bzw. für unterschiedliche Bewegungsrichtungen des Massekörpers oder Fahrerhauses einstellen. So kann beispielsweise die Federrate der elastischen Verbindung in vertikaler Richtung die Steifigkeit des Wattgestänges bezüglich der Wankbewegungen des Massekörpers bzw. Fahrerhauses bestimmen, während die hierzu unterschiedliche Federrate der elastischen Verbindung in horizontaler Richtung die Steifigkeit des Wattgestänges bezüglich seitlicher Bewegungen des Massekörpers bzw. des Fahrerhauses festlegt.

Gemäß einer weiteren, bevorzugten Ausführungsform der Erfindung zeichnet sich die die Aufhängungseinrichtung dadurch aus, dass die Wattgestängeanordnung zwei Wattgestänge umfasst. Dabei stimmen die Geradführungsrichtungen der zumindest zwei Wattgestänge miteinander überein, die Wattgestänge sind voneinander entlang der gemeinsamen Geradführungsrichtung beabstandet angeordnet, und die Bewegungsebenen der Wattgestänge verlaufen parallel zueinander.

Diese zumindest zwei beabstandete Watt'sche Gestänge umfassende Ausführungsform besitzt den Vorteil, dass sich zusätzlich zur Geradführung des Massekörpers - die sich bereits mit einem einzigen Wattgestänge verwirklichen lässt - zunächst einmal ohne weitere Hilfsmittel auch die Wankbewegungen des Massekörpers bzw. der Kabine gegenüber dem Chassis wirkungsvoll unterdrücken lassen. Dies hängt damit zusammen, dass beabstandet angeordnete Wattgestänge zwischen Unterbau und Massekörper nicht nur Querkräfte (wie ein einzelnes Wattgestänge), sondern aufgrund des als Hebelarm wirkenden Abstandes zwischen den Wattgestängen auch Drehmomente, insbesondere Wankmomente, übertragen bzw. ableiten können.

Mit diesem Hintergrund ist gemäß einer weiteren, besonders bevorzugten Ausführungsform der Erfindung ferner vorgesehen, dass die den Querschubstreben der beiden Watt'schen Gestängen zugeordneten äußeren Anlenkpunkte jeweils paarweise auf einer beiden Wattgestängen gemeinsamen Schwenkachse liegen. Dabei sind die Querschubstreben unterschiedlicher Wattgestänge paarweise zudem jeweils einstückig in Form einer beispielsweise V-förmigen Kombinationsstrebe ausgebildet. Hierdurch teilen sich zunächst einmal die äußeren Anlenkpunkte der Querschubstreben der beiden Wattgestänge insgesamt nur zwei Gelenkachsen, anstelle wie bei zwei separaten Watt'schen Gestängen vier Gelenkachsen zu beanspruchen.

Ferner bringt diese Ausführungsform, bei welcher somit zwei gemeinsam angelenkte Querschubstreben jeweils ein einem Dreieckslenker ähnelndes, V-förmiges Bauteil bilden, insbesondere konstruktive Vereinfachungen mit sich, indem die Anzahl der notwendigen Bauteile, insbesondere die Anzahl der benötigten Gelenkverbindungen, stark reduziert wird. Denn es werden nun nicht mehr vier Schwenklager - wie bei zwei Wattgestängen mit separat gelagerten Querschubstreben - sondern nur noch zwei Schwenklager zur Anbindung der äußeren Anlenkpunkte aller vier Querschubstreben der beiden Watt'schen Gestänge benötigt. Auf diese Weise werden somit Bauelemente und damit Kosten eingespart. Ferner baut die Wattgestängeanordnung auf diese Weise besonders kompakt und bauraumsparend, und es werden konstruktiv nur noch zwei statt vier rahmenseitige Anbindungspunkte benötigt.

Da sich die durch die beiden Watt'schen Lenker erzeugten, auf die rahmenseitigen Anbindungspunkte wirkenden Kräfte bei dieser Anordnung aufgrund vektorieller Addition teilweise gegenseitig aufheben, können die rahmenseitigen Anbindungsteile leichter und somit kostengünstiger ausgelegt werden als bei zwei Wattgestängen mit separat angelenkten Querschubstreben. Ferner können beim Einsatz von Elastomerlagern reduzierte Steifigkeiten für die Elastomerlager verwendet werden, was bessere Schallisolation verspricht. Schließlich können auf diese Weise sämtliche Querschubstreben der beiden Wattgestänge problemlos auch in ein und derselben Bewegungsebene angeordnet werden, was nochmals Bauraum einspart.

Gemäß einer weiteren Ausführungsform der Erfindung sind zwei verschiedene Anlenkpunkte einer aus zumindest zwei Wattgestängen bestehenden Wattgestängeanordnung mittels zweier Aktuatoren relativbeweglich mit dem Massekörper bzw. mit dem Unterbau verbunden. Durch die Verwendung zweier an unterschiedlichen Anlenkpunkten der Wattgestängeanordnung angreifender Aktuatoren ergibt sich infolge der dadurch gebildeten Hintereinanderschaltung und Addition der Betätigungswege der beiden Aktuatoren insbesondere ein größerer Verstellbereich, ohne dass hierzu längere Aktuatoren oder größere Verstellwege vorgesehen werden müssten. Ferner lässt sich auf diese Weise ein symmetrischer Ausgleich der Wankbewegungen um eine in der Mittelebene der Fahrerkabine befindliche Längsachse erreichen.

Gemäß einer hierzu alternativen Ausführungsform der Erfindung ist vorgesehen, dass der Anlenkpunkt des zumindest einen Aktuators an der Wattgestängeanordnung mit dem Drehpunkt eines der Watt'schen Lenker der Wattgestängeanordnung verbunden ist. Hierbei verläuft gleichzeitig die Wirkungsrichtung des zumindest einen Aktuators im Wesentlichen senkrecht zur Geradführungsrichtung der Wattgestängeanordnung.

Bei dieser Ausführungsform ergibt sich zunächst mal eine besonders platzsparende Anordnung und gleichzeitig eine gute Hebelwirkung des Aktuators, sowie damit verbundene vergleichsweise niedrige Kräfte und eine entsprechend sparsame Dimensionierbarkeit für den Aktuator. Dies hängt mit dem erheblichen Abstand zwischen den beiden Watt'schen Lenkern der Wattgestängeanordnung zusammen, welcher bei dieser Ausführungsform den Hebelarm für das durch den Aktuator erzeugte Drehmoment als Gegenpol zu einem externen Wankmoment bildet.

Ferner ergibt sich bei dieser Ausführungsform - gegenüber Ausführungsformen mit paarweisem Aktuatorangriff an den Lagerpunkten der Querschubstreben - aufgrund des Angriffs des Aktuators unmittelbar an einem der Watt'schen Lenker der Wattgestängeanordnung (und somit in der Mitte der Wattgestängeanordnung, bezogen auf deren Wirkungsrichtung) der Vorteil, dass die aktuatorische gesteuerte Veränderung des Wankwinkels auf diese Weise unmittelbar um dem Drehpunkt des jeweils anderen Watt'schen Lenkers erfolgt, welcher ebenfalls in der Mitte der Wattgestängeanordnung liegt. Hierdurch erübrigt sich auch die Notwendigkeit für einen zweiten Aktuator, wie dies bei vorstehenden Ausführungsformen erforderlich ist, sofern auch dort die gewünschte Veränderung des Wankwinkels um eine Mittelachse des Massekörpers bzw. des Fahrerhauses erfolgen soll.

Mittels der Anordnung der Wirkungsrichtung des Aktuators im Wesentlichen senkrecht zur Geradführungsrichtung der Wattgestängeanordnung ergibt sich ferner eine optimale Entkopplung zwischen der Geradführung des Wattgestänges - beispielsweise der senkrechten Führung eines Lkw-Fahrerhauses - einerseits und der Beeinflussung der Wankbewegungen des Fahrerhauses durch den in diesem Fall im wesentlichen in horizontaler Richtung wirkenden Aktuator.

Mit diesem Hintergrund ist gemäß einer weiteren Ausführungsform der Erfindung vorgesehen, dass nur ein Aktuator vorhanden ist, wobei der Anlenkpunkt des Aktuators an der Wattgestängeanordnung mit dem Drehpunkt desjenigen Watt'schen Lenkers der Wattgestängeanordnung verbunden ist, welcher den größeren Abstand zu dem Massekörper aufweist. Auf diese Weise wird der Abstand zwischen dem Schwerpunkt des Massekörpers bzw. Fahrerhauses und dem - durch den Drehpunkt des jeweils anderen der beiden Watt'schen Lenker gebildeten - Rotationszentrum minimiert, wodurch auch die - insbesondere bei einem Fahrerhaus - unerwünschten Seitwärtsbewegungen im Fall der aktuatorischen Veränderung des Wankwinkels minimiert sind.

Gemäß einer weiteren Ausführungsform der Erfindung ist vorgesehen, dass dem Aktuator ein Federelement parallel geschaltet ist. Auf diese Weise bleibt auch bei einem etwaigen Ausfall des Aktuators eine Residual- bzw. Reststeifigkeit der Wankabstützung erhalten, indem das Federelement einen etwa ausgefallenen Aktuator in dessen Mittelstellung hält, und bei etwaigen Auslenkungen (Wankbewegungen) auch wieder dorthin zurückführt.

Die Erfindung lässt sich unabhängig davon verwirklichen, welcher Art der Aktuator ist und wie dieser konstruktiv ausgebildet ist, solange die für die Wankstabilisierung erforderlichen Kräfte von dem Aktuator aufgebracht werden können. Mit diesem Hintergrund ist es gemäß weiterer Ausführungsformen der Erfindung vorgesehen, dass der Aktuator als passiver, als semiaktiver oder als aktiver Aktuator ausgebildet ist. Dabei kann der passive Aktuator beispielsweise und in der einfachsten Form als Federelement umgesetzt werden, ein semiaktiver Aktuator kann beispielsweise durch einen hydraulischen Dämpfer oder durch eine Gasdruckfeder gebildet sein, und ein aktiver Aktuator beispielsweise in Form eines hydraulischen, pneumatischen oder elektrischen Linearaktuators vorliegen.

Mit diesem Hintergrund und mit dieser Ausführungsform der Erfindung wird es beispielsweise auch möglich, die erfindungsgemäße Aufhängungseinrichtung nachträglich vom nur passiven zu einem semiaktiven oder aktiven System umzurüsten, einfach indem der Aktuator und ggf. die zugehörige Ansteuerung Ausgetauscht wird.

Im Folgenden wird die Erfindung anhand lediglich Ausführungsbeispiele darstellender Zeichnungen näher erläutert. Dabei zeigt:
- **Fig. 1**: in schematischer Darstellung eine Ausführungsform einer Aufhängungsanordnung mit Wattgestänge und Aktuator gemäß der vorliegenden Erfindung;
- **Fig. 2**: in isometrischer Darstellung ein Einbaubeispiel einer Ausführungsform einer erfindungsgemäßen Aufhängungseinrichtung;
- **Fig. 3**: in einer **Fig. 1** entsprechenden Darstellung und Ansicht eine Ausführungsform einer erfindungsgemäßen Aufhängungseinrichtung mit zwei Aktuatoren;
- **Fig. 4**: in vergrößerter Ausschnittdarstellung die Anbindung eines der Aktuatoren bei der Aufhängungseinrichtung gemäß **Fig. 3****;**
- **Fig. 5**: in einer **Fig. 1** bzw. **3** entsprechenden Darstellung und Ansicht eine Ausführungsform einer erfindungsgemäßen Aufhängungseinrichtung mit Aktuatorangriff am Watt'schen Lenker; und
- **Fig. 6**: in vergrößerter Ausschnittdarstellung die Anbindung des Aktuators am Watt'schen Lenker bei der Aufhängungseinrichtung gemäß **Fig. 5****.**

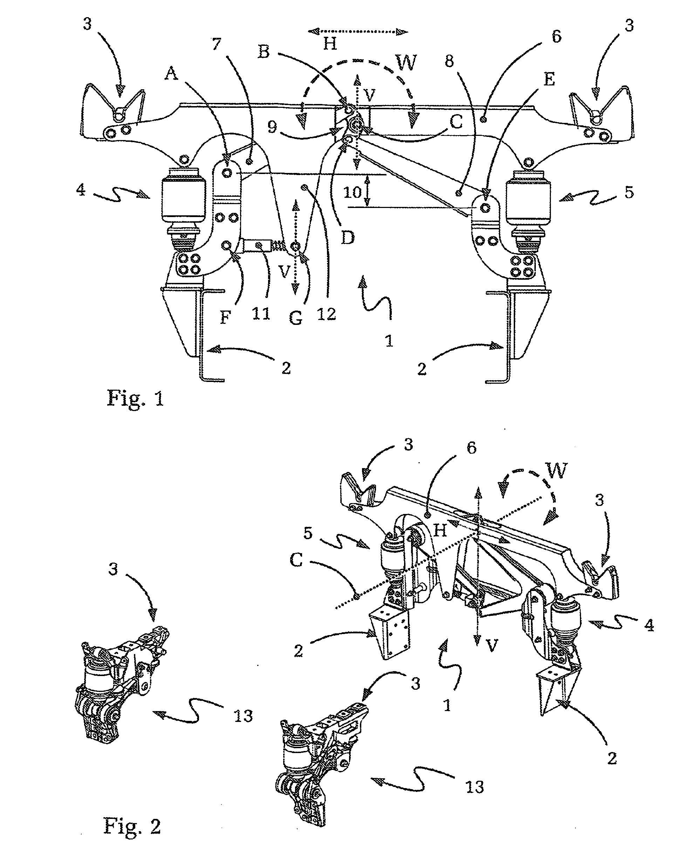

**Fig. 1** zeigt in schematischer Darstellung eine Ausführungsform einer Aufhängungseinrichtung 1 gemäß der vorliegenden Erfindung. Die Aufhängungseinrichtung 1 dient der Unterstützung eines (nicht dargestellten) Lkw-Fahrerhauses im Bereich des hinteren Endes des Fahrerhauses, gegenüber dem in **Fig. 1** schematisch angedeuteten Fahrgestell 2 des Lastkraftwagens. Zur Aufnahme und Unterstützung des Fahrerhauses ist die Aufhängungseinrichtung 1 gemäß **Fig. 1** mit zwei Aufiiahmepunkten 3 versehen.

Man erkennt in **Fig. 1** ferner, dass die zwischen Fahrerhaus und Chassis **2** angeordnete Aufhängungseinrichtung 1 außer zwei Feder-/Dämpfer-Einrichtungen 4, 5 ein Watt'sches Gestänge mit fünf Gelenken umfasst, die mit den Buchstaben A, B, C, D, E bezeichnet sind. Von den Gelenken A bis E sind bei der dargestellten Ausführungsform A und E chassisfest, wohingegen C fahrerhausfest, bzw. mit der oberen Querbrücke 6 der Aufhängungseinrichtung 1 verbunden ist. Die Gelenkpunkte A bis E des Wattgestänges sind dabei durch eine Anordnung aus zwei Querschubstreben 7, 8 und einem zentralen Watt'schen Lenker 9 miteinander verbunden.

Aufgrund der besonderen - für sich genonunen bekannten - Kinematik des Wattgestänges A, B, C, D, E gemäß **Fig. 1** werden dabei seitliche Querbewegungen H des Fahrerhauses - bzw. der mit dem Fahrerhaus verbundenen oberen Querbrücke 6 der Aufhängungseinrichtung 1 - relativ zum Chassis 2 jeweils über die Gelenke C, A und E des Wattgestänges aufgenommen und damit unterbunden. Die Vertikalbewegung V zwischen Fahrerhaus und Chassis 2 bleibt aufgrund der freien vertikalen Beweglichkeit des jeweiligen Watt'schen Lenkers 9 jedoch vollständig unbehindert und wird lediglich durch die Feder-/Dämpfer-Anordnungen 4, 5 aufgenommen bzw. abgefangen.

Auftretende statische oder dynamische Querkräfte werden somit unmittelbar über die Querschubstreben 7 und 8, über den Watt'schen Lenker 9 sowie über die Gelenke A bis E zwischen Fahrerhaus und Chassis 2 übertragen und abgeleitet, so dass - jedenfalls im Bereich des Wattgestänges, bei der vorliegenden Ausführungsform also im hinteren Bereich des Fahrerhauses - neben dem Wattgestänge keine weitere seitliche Führung oder Abstützung des Fahrerhauses erforderlich ist.

Dies hängt damit zusammen, dass der mittlere Drehpunkt C des Watt'schen Lenkers 9 aufgrund seiner Führung durch die beiden dem Watt'schen Lenker 9 zugeordneten Querschubstreben 7 und 8 - die hierzu die gleiche Länge aufweisen müssen, und deren äußere Anlenkpunkte A und E einen vertikalen Abstand 10 aufweisen müssen, der der vertikalen Abmessung des Watt'schen Lenkers 9 entspricht - seine durch den punktierten Doppelpfeil V in **Fig. 1** angedeutete vertikale Bewegungsbahn nicht verlassen kann. Hierdurch werden obere Querbrücke 6 bzw. Fahrerhaus und Chassis 2 also zunächst einmal stets in der dargestellten, gegenseitig übereinander zentrierten Lage gehalten. Eine relative Querbewegung des Fahrerhauses relativ zum Chassis 2 findet somit dank des Wattgestänges A, B, C, D, E nicht statt.

Man erkennt in **Fig. 1** ferner einen Aktuator 11, welcher über einen Hebelarm 12 an der mit dem Fahrerhaus oberen Querbrücke 6 der Aufhängungseinrichtung 1 - und damit auch mit dem Anlenkpunkt C des zentralen Watt'schen Lenkers 9 des Wattgestänges - verbunden ist, wobei die (hier horizontale) Wirkungsrichtung des Aktuators 11 senkrecht zur Geradführungsrichtung V des Wattgestänges verläuft.

Aufgrund dieser Anordnung erfüllt der Aktuator 11 bei dieser Ausführungsform eine Doppelfunktion. Einerseits ergibt sich über den bei F, G angebundenen Aktuator 11 zusammen mit den Aufhängungspunkten A, C des Wattgestänges ein angenähertes Parallelogramm A, C, G, F und somit eine bereits annähernde Parallelführung der mit dem Fahrerhaus verbundenen oberen Querbrücke 6 der Aufhängungseinrichtung 1, entlang der vertikalen Bewegungsrichtung V. Auf diese Weise wird auch bereits eine Annäherung an die Wankstabilisierung der oberen Querbrücke 6 bzw. des Fahrerhauses gegenüber unerwünschten Wankbewegungen W um die Längsachse C des Fahrzeugs erreicht.

Andererseits lässt sich der so angeordnete Aktuator 11 ferner auch zur aktiven Stabilisierung bzw. Kompensation von unerwünschten Wankbewegungen W einsetzen, indem - bei der Erfassung unerwünschter Wankbewegungen W durch eine geeignete Sensor- und Steuerungsschaltung - aktiv die Länge des Aktuators 11 so verändert wird, dass den Wankbewegungen W entgegengewirkt, bzw. die Wankbewegungen W kompensiert werden.

Auch eine aktive Beeinflussung des statischen Wankwinkel der Fahrerkabine ist auf diese Weise möglich. So kann die Fahrerkabine beispielsweise beim Parken des LKWs quer zu einem Gefälle um einen gewissen Winkelbetrag W - entgegen der Gefällerichtung - aktiv um die Fahrzeuglängsachse C geneigt werden, um so den Komfort für den Fahrer zu verbessern.

**Fig. 2** stellt isometrisch eine mögliche Einbausituation für eine Aufhängungseinrichtung 1 gemäß der Erfindung dar. Man erkennt zunächst eine Ausführungsform der Aufhängungseinrichtung 1 gemäß der vorliegenden Erfindung, welche wie die Ausführungsform gemäß **Fig. 1** im Bereich des hinteren Endes eines (nicht dargestellten) Fahrerhauses eines Lastkraftwagens angeordnet, und mittels entsprechender Beschläge 2 mit dem Chassis des Lastkraftwagens verbunden ist.

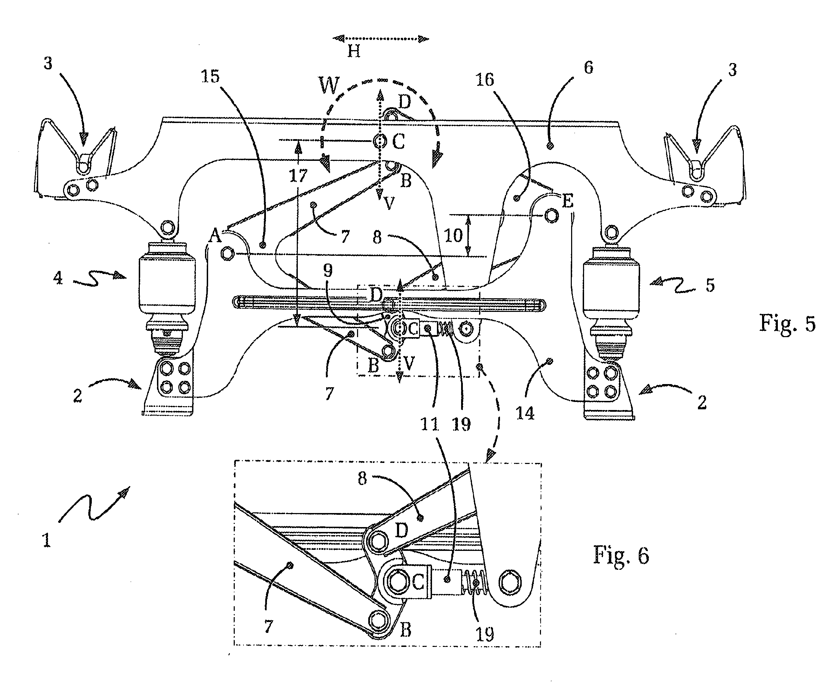

Die vordere Anbindung des Fahrerhauses am Chassis erfolgt dabei in für sich genommen bekannter Weise über abgefederte Doppelgelenke 13 mit weiteren zwei Auflagerpunkten 3 für die Fahrerkabine. Die Aufhängungseinrichtung 1 selbst ist bei der in **Fig. 2** dargestellten Ausführungsform als eine Kombination aus zwei Wattgestängen ausgebildet, und entspricht damit im Wesentlichen der Ausführungsform gemäß **Fig. 5****.**

Die Aufhängungseinrichtung 1 gemäß **Fig. 2** mit ihren beiden gekoppelten Wattgestängen sorgt somit dafür, dass in dem hinteren, besonders weich aufgehängten Bereich der Fahrerkabine lediglich vertikale Einfederungsbewegungen V möglich sind; und zusätzlich dafür, dass keine unerwünschten Wankbewegungen W um eine Längsachse C der Fahrzeugkabine auftreten.

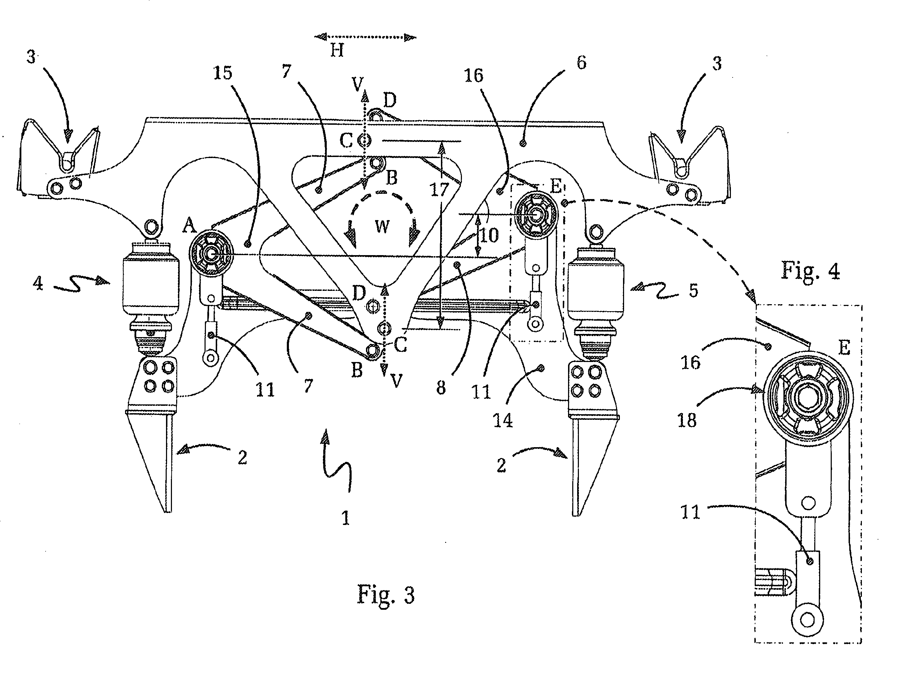

**Fig. 3** zeigt in einer **Fig. 1** entsprechenden Ansicht eine weitere Ausführungsform einer erfindungsgemäßen Aufhängungseinrichtung, bei welcher zunächst einmal zwei Watt'sche Gestänge A, B, C, D, E vorhanden sind, wobei die beiden Watt'schen Gestänge A, B, C, D, E hier vertikal übereinander angeordnet sind. Dabei sind die den Querschubstreben 7, 8 der beiden Wattgestänge A, B, C, D, E zugeordneten äußeren Anlenkpunkte A, E jeweils paarweise auf einer beiden Wattgestängen jeweils gemeinsamen Schwenkachse bei A bzw. E auf einer unteren Querbrücke 14 der Aufhängungseinrichtung 1 angeordnet. Zudem sind jeweils zwei Querschubstreben 7, 8 verschiedener Wattgestänge A, B, C, D, E paarweise in Form jeweils einer Kombiuationsstrebe 15 bzw. 16 als einstückiges Bauteil ausgebildet.

Diese Ausführungsform, bei der die gemeinsam bei A, E, angelenkten Querschubstreben somit jeweils ein hier einem Dreieckslenker 15, 16 ähnelndes, V-förmiges Bauteil bilden, bringt gegenüber einer Aufhängungseinrichtung mit zwei separaten Wattgestängen - aufgrund des Wegfalls einiger der dort erforderlichen Lagerpulikte - insbesondere erhebliche konstruktive Vereinfachungen mit sich. Die bei dieser Ausführungsform bei Einfederungsbewegungen auftretenden, geringfügigen kinematischen Verspannungen in den einstückigen Kombinationsstreben 15, 16 lassen sich durch leichte elastische Verformung der V-förmigen Kombinationsstreben 15, 16 problemlos auffangen.

Wattgestängeanordnungen mit zwei vertikal beabstandet angeordneten Watt'schen Gestängen besitzen gegenüber Ausführungsformen mit lediglich einem Wattgestänge (vgl. beispielsweise **Fig. 1**) insbesondere den Vorteil, dass sich so nicht nur eine Geradführung der oberen Querbrücke 6 (bzw. des Fahrerhauses) relativ zum Chassis 2 entlang der Vertikalen V realisieren lässt, sondern dass auf diese Weise unmittelbar auch eine Stabilisierung gegenüber Rotationsbewegungen - sprich gegenüber den unerwünschten Wankbewegungen W - erfolgen kann.

Dies liegt darin begründet, dass die beiden gemäß **Fig. 3** mit gegenseitigem vertikalem Abstand 17 zwischen Chassis 1 und Fahrerhaus 3 angeordneten beiden Wattgestänge A, B, C, D, E nicht nur - wie bei einem einzelnen Watt'schen Gestänge, siehe beispielsweise beim Ausführungsbeispiel gemäß **Fig. 1** **-** Querkräfte entlang der Horizontalen H übertragen können. Vielmehr lassen sich auf diese Weise aufgrund des als Hebelarm wirkenden vertikalen Abstandes 17 zwischen den beiden Wattgestängen auch Drehmomente übertragen, die um die Längsachse des Fahrzeugs wirken, bei denen es sich also um Wankmomente W gemäß **Fig.** 1 bis 3 handelt.

Dies bedeutet mit anderen Worten, dass das Fahrerhaus bei dem in **Fig. 3** dargestellten Ausführungsbeispiel zunächst lediglich noch die (erwünschten) vertikalen Ausgleichsbewegungen entlang den punktierten Linien V relativ zum Chassis 2 ausführen kann, dass jedoch seitliche Relativbewegungen H wie auch Rotationen W des Fahrerhauses gegenüber dem Chassis 2 dank der dargestellten doppelten Wattgestängeanordnung zunächst einmal unterbunden werden.

Dies führt wie eingangs beschrieben jedoch zunächst dazu, dass Chassis 2 und Fahrerhaus bezüglich der Wankmomente bzw. Wankbewegungen W miteinander weitgehend starr gekoppelt sind, so dass bei einer etwaigen Schrägstellung des Chassis 2 sich diese Schrägstellung - möglicherweise unerwünscht - auch auf die obere Querbrücke 6 und damit auf das Fahrerhaus überträgt. Dies gilt sowohl im dynamischen Fall, also beispielsweise während der Fahrt, als auch im statischen Fall, beispielsweise bei quer zum Hang abgestellten Fahrzeug.

Die Ausführungsform gemäß **Fig. 3** unterscheidet sich von der Ausführungsform gemäß **Fig. 1** jedoch auch dadurch, dass bei der Ausführungsform gemäß **Fig. 3** nicht nur einer, sondern zwei Aktuatoren 11 vorhanden sind, welche jeweils an einem Elastomergelenk A bzw. E der Aufhängungseinrichtung angreifen. Der Angriff der jeweiligen Aktuatoren 11 an dem Elastomergelenk A bzw. E ist dabei vergrößert nochmals in **Fig. 4** dargestellt. Die Aktuatoren 11 sind demnach an jeweils beiden Enden gelenkig an die Aufhängungseinrichtung 1 angebunden, wobei das zeichnullgsbezogen untere Ende des jeweiligen Aktuators 11 mit der unteren Querbrücke 14 der Aufhängungseinrichtung 1 verbunden ist, während das obere Ende des jeweiligen Aktuators 11 an denjenigen Teil des Elastomergelenks A bzw. E der jeweiligen Kombinationsstrebe 15, 16 angekoppelt ist (hier an die äußere Gelenkhülse 18), welcher jeweils mit der dem Gelenk zugeordneten Kombinationsstrebe 15, 16 verbunden ist.

Dank der auf diese Weise geschaffenen aktuatorischen Verstellbarkeit der elastischen Anlenkpunkte A bzw. E der beiden V-förmigen Kombinationsstreben 15, 16 lässt sich auch bei der Ausführungsform gemäß **Fig. 3** somit erreichen, dass das Fahrerhaus auch bei Schrägstellungen des Chassis 2 seine horizontale Position beibehält. Denn im Fall der Sensierung einer Schrägstellung des Chassis 2 lässt sich - mittels einer entsprechenden Ansteuerung der beiden Aktuatoren 11 und damit verbundener Rotation der gesamten Wattgestängeanordnung - sicherstellen, dass die zentralen Anlenkpunkte C der beiden Watt'schen Lenker B-C-D horizontal so gegeneinander verschoben werden, dass die obere Querbrücke 6 der Aufhängungseinrichtung 1 - und damit auch das Fahrerhaus - die horizontale Position beibehält.

Bei der Ausführungsform gemäß **Fig. 3** und **4** weisen die Elastomerlager A und E, mit denen die beiden V-förmigen Kombinationsstreben 15, 16 der beiden Wattgestänge mit der unteren Querbrücke 14 verbunden sind, ferner zwei unterschiedliche Federsteifigkeiten auf. Eine erste Federsteifigkeit entlang der Horizontalen H sorgt für eine Entkopplung des Fahrerhauses bezüglich horizontaler Schwingungen aus dem Fahrzeugchassis, während eine zweite, von der ersten weitgehend unabhängige Federsteifigkeit der beiden Elastomerlager A und E entlang der Vertikalen V dafür sorgt, dass genügend Bewegungsweg für die Aktuatoren 11 zur Einregelung der horizontalen Lage des Fahrerhauses zur Verfügung steht.

Zugleich fungiert - bei einem etwaigen Ausfall der Aktuatoren 11 oder deren Ansteuerung - die Federsteifigkeit der Elastomerlager A und E entlang der Vertikalen V im Sinne einer Residual-Federsteifigkeit als Notlauffunktion. In einem solchen Fall tritt somit kein unkontrollierbarer Kabinenschiefstand oder Komplettausfall der Wankabstützung auf, sondern es wird die obere Querbrücke 6 und damit die Fahrzeugkabine mittels der verbleibenden, vertikalen Rückstellkräfte der Elastomerlager A und E parallel zum Chassis stabilisiert.

**Fig. 5** zeigt eine weitere Ausführungsform einer erfindungsgemäßen Aufhängungseinrichtung 1 mit zwei Wattgestängen A, B, C, D, E. Die Aufhängungseinrichtung 1 gemäß **Fig. 5** unterscheidet sich von der zunächst ähnlich aufgebauten Aufhängungseinrichtung gemäß **Fig. 3** insbesondere dadurch, dass lediglich ein Aktuator 11 vorhanden ist, sowie ferner durch die Anordnung und Positionierung des Aktuators 11.

Ebenso wie die Aufhängungseinrichtung gemäß **Fig. 3** umfasst die Aufhängungseinrichtung gemäß **Fig. 5** zunächst einmal eine Anordnung aus zwei Watt'schen Gestängen A, B, C, D, E, wobei die Querschubstreben 7, 8 der beiden Watt'schen Gestänge A, B, C, D, E jeweils wieder paarweise einstückig in Form von V-förmigen Kombinationsstreben 15, 16 ausgebildet sind.

Im Unterschied zu der Aufhängungseinrichtung gemäß **Fig. 3** ist hier jedoch nur ein Aktuator 11 vorhanden, welcher zudem nicht an einem der Aufhängungspunkte A bzw. E der V-förmigen Kombinationsstreben 15, 16 angreift, sondern vielmehr direkt einem der beiden Watt'schen Lenker 9 zugeordnet ist. Dies bedeutet mit anderen Worten, dass bei dieser Ausführungsform die Drehpunkte C der beiden Watt'schen Lenker 9 zunächst einmal - bezüglich der unteren Querbrücke 14 der Aufhängungseinrichtung 1 - stets lotrecht übereinander positioniert bleiben, und somit etwaigen Wankbewegungen W des Chassis 2 unmittelbar folgen.

Die Dämpfung bzw. aktive Kompensation der Wankbewegungen W wird bei dieser Ausführungsform der Erfindung sodann dadurch bewerkstelligt, dass die obere Querbrücke 6 der Aufhängungseinrichtung 1 - mittels des Aktuators 11 - gegenüber dem Drehpunkt einer der beiden Watt'schen Lenker verschwenkt wird. Bei der dargestellten Ausführungsform gemäß **Fig. 5** erfolgt diese Verschwenkung bzw. Wankkompensation mit dem Drehpunkt C des oberen der beiden Watt'schen Lenker als Rotationszentrum dadurch, dass der Aktuator 11 dem unteren der beiden Watt'schen Lenker 9 zugeordnet und mit diesem verbunden ist.

Dies ist vorteilhaft zunächst einmal insofern, als - insbesondere gegenüber der Ausführungsform gemäß **Fig. 3** **-** nur noch ein einziger Aktuator 11 benötigt wird, um die obere Querbrücke 6 bzw. die Fahrerkabine um eine in ihrer Symmetrieebene liegende Mittelachse C zu schwenken. Ferner lässt sich auf diese Weise der Drehpunkt C, um den die obere Querbrücke 6 bzw. die Fahrzeugkabine bei dieser Ausführungsform geschwenkt wird, so nah wie möglich an den Schwerpunkt der Kabine heranführen. Hierdurch werden die durch eine Wankkompensation herbeigeführten seitlichen Bewegungen des Schwerpunkts der Fahrzeugkabine minimiert. Sollte sich jedoch aus konstruktiven Gründen eine dementsprechende Notwendigkeit ergeben, so kann der Drehpunkt C der oberen Querbrücke 6 auch auf den unteren der beiden Watt'schen Lenker 9 gelegt und der Aktuator 11 dem oberen Watt'schen Lenker zugeordnet werden.

Ferner ist es bei der Ausführungsform gemäß **Fig. 5** nicht mehr notwendig, eigens eine vergleichsweise hohe Elastizität der Anbindungspunkte A, E der Kombinationsstreben 15, 16 an der unteren Querbrücke 14 vorzusehen, um einen für die Wankkompensation - bei der Ausführungsform gemäß **Fig. 3** **-** noch erforderlichen Bewegungsfreiheitsgrad der Kombinationsstreben 15, 16 in vertikaler Richtung V zu gewährleisten.

Vielmehr ermöglicht es die Ausführungsform gemäß **Fig. 5** und **6****,** dass die Verbindung der Kombinationsstreben 15, 16 mit der unteren Querbrücke **14** an ihren Anbindungspunkten A, E - jedenfalls bezüglich der vertikalen Anbindung - auch sehr steif ausgelegt werden kann. Hierdurch wird die Regelungsmöglichkeit gegenüber den unerwünschten Wankbewegungen W mittels des Aktuators 11 verbessert, da auf diese Weise sekundäre Schwingungseffekte aufgrund von Elastizitäten der Wattgestänge-Anbindung insbesondere in der vertikalen Anbindung bei den Gelenkpunkten A und E minimiert werden bzw. wegfallen. Auch erhöht sich hierdurch die Robustheit und Lebensdauer der Elastomerlager A und E, mit denen die Kombinationsstreben 15, 16 an der unteren Querbrücke 14 angebunden sind.

Unabhängig davon lässt sich jedoch die Steifigkeit der Seitenführung der Aufhängungseinrichtung 1 nach wie vor wunschgemäß bzw. variabel einstellen, indem die Elastomerlager A und E der V-förmigen Kombinationsstreben 15, 16 an deren Verbindungspunkten mit der unteren Querbrücke 14 eine entsprechende Nachgiebigkeit bzw. Federkonstante entlang der Horizontalen H erhalten, während die hiervon unabhängige Federkonstante der Elastomerlager A und E entlang der Vertikalen V nach wie vor unverändert steif gewählt werden kann. Auch lässt sich das Wank- und das seitliche Nachgiebigkeitsverhalten je nach Einsatzfall und Kundenanforderung entsprechend anpassen, indem passende Elastomerlager A und E mit entsprechenden und ggf. unterschiedlichen Federsteifigkeiten in horizontaler H bzw. vertikaler Richtung V gewählt werden.

Um auch bei der Ausführungsform gemäß **Fig. 5** die gewünschte Notlaufeigenschaft bzw. Residualsteifigkeit der Wankabstützung zu erhalten, ist dem Aktuator 11 - ähnlich wie auch bereits im Ausführungsbeispiel gemäß **Fig. 1** - ein Federelement 19 parallel geschaltet.

Dies geht insbesondere auch aus der vergrößerten Ausschnittsdarstellung gemäß **Fig. 6** hervor. Das Federelement 19 sorgt dafür, dass der Aktuator 11 bei einem etwaigen Ausfall aus jeder Stellung in seine Mittelstellung zurückgeführt wird, wodurch auch ein etwa eingestellter relativer Wankwinkel W zwischen oberer 6 und unterer Querbrücke 14 bzw. zwischen Kabine und Chassis 2 wieder entsprechend auf Null eingeregelt bzw. reduziert wird.

Im Unterschied zu dem Ausführungsbeispiel gemäß **Fig. 1** ist es bei dem Ausführungsbeispiel gemäß **Fig. 5** dabei jedoch nicht erforderlich, dass der Aktuator 11 nachgeregelt wird, um so eine parallele Einfederung des Fahrerhauses sicherzustellen. Eine aktive Ansteuerung des Aktuators 11 ist beim Ausführungsbeispiel gemäß **Fig. 5** vielmehr nur dann notwendig, wenn tatsächlich der relative Wankwinkel W zwischen Kabine und Chassis 2 verändert werden soll.

Aufgrund des langen effektiven Hebelarms 17, mit dem der Aktuator 11 an der oberen Querbrücke 6 angreift, ergibt sich zudem eine vorteilhafte Kraftübersetzung mit einer entsprechend kompakten und sparsamen Auslegungsmöglichkeit bezüglich des Aktuatorquerschnitts. Überdies ist der Aktuator 11 bei dieser Ausführungsform besonders gut geschützt angeordnet, und beansprucht keinen nennenswerten zusätzlichen Bauraum gegenüber einer Ausführungsform ohne aktive Wankstabilisierung.

Auch ist die Umrüstung der Ausführungsform insbesondere gemäß **Fig. 5** **-** zwischen einem passiven System, einem semiaktiven System oder einem System mit aktiver Wankkompensation - jederzeit auch nachträglich möglich, indem an der Stelle des Aktuators 11 entweder lediglich ein Federelement vorgesehen wird (passives System), indem ein Stoßdämpfer oder eine Gasdruckfeder eingesetzt wird (semiaktives System), oder indem wie oben beschrieben ein aktiv gesteuerter, beispielsweise hydraulischer Aktuator 11 vorgesehen wird (aktive Wankkompensation).

Im Ergebnis wird damit deutlich, dass dank der Erfindung eine Aufhängungseinrichtung zur federnden Aufhängung eines Massekörpers, beispielsweise einer Lkw-Fahrerkabine, geschaffen wird, mit der sich der gewünschte, insbesondere vertikale Bewegungsfreiheitsgrad der Fahrerkabine konstruktiv platzsparend sowie im Betrieb zuverlässig definieren lässt. Gleichzeitig lassen sich unerwünschte Wankbewegungen oder Schiefstellungen des Massekörpers bzw. der Fahrzeugkabine - auch im Falle von Wankanregungen des Unterbaus bzw. des Chassis - aktiv aktuatorisch unterbinden.

Die Erfindung ermöglicht damit eine konstruktiv einfache, aktive Wankunterdrückung - im Sinne der Komfortverbesserung für den Fahrer - insbesondere beim Einsatz der Erfindung im Bereich der Lkw-Fahrerkabinensysteme.

### Bezugszeichenliste

- 1: Aufhängungseinrichtung
- 2: Unterbau, Fahrzeugchassis
- 3: Fahrerhaus-Auflagerpunkt
- 4, 5: Feder-/Dämpfer-Anordnung
- 6: obere Querbrücke
- 7, 8: Wattgestänge-Querschubstrebe
- 9: Watt'scher Lenker
- 10: Abstand
- 11: Aktuator
- 12: Hebelarm
- 13: Doppelgelenk
- 14: untere Querbrücke
- 15, 16: Kombinationsstrebe
- 17: Abstand, Hebelarm
- 18: Gelenkhülse
- 19: Federelement
- A bis G: Gelenk, Anlenkpunkt
- H: horizontale Bewegungsrichtung
- V: vertikale Bewegungsrichtung
- W: Wankbewegung, Wankmoment, Wankwinkel

## Patentansprüche

1. Aufhängungseinrichtung (1) zur federnden Aufhängung eines Massekörpers, insbesondere einer Fahrerkabine eines Lastkraftwagens, relativ zu einem Unterbau (2), insbesondere relativ zu einem Fahrzeugchassis, die Aufhängungseinrichtung (1) aufweisend eine zwischen Massekörper und Unterbau (2) angeordnete Feder-/Dämpfer-Anordnung (4, 5) zur Dämpfung von Stößen bzw. Schwingungen, wobei die Aufhängungseinrichtung (1) eine Wattgestängeanordnung mit zumindest einem den Massekörper und den Unterbau (2) relativbeweglich verbindenden Wattgestänge (A, B, C, D, E) zur Reduktion der Bewegungsfreiheitsgrade des Massekörpers gegenüber dem Unterbau (2) umfasst,
**dadurch gekennzeichnet,**
**dass** zumindest einer der Anlenkpunkte (A, B, C, D, E, G) des zumindest einen Wattgestänges (A, B, C, D, E) relativbeweglich mit Massekörper bzw. Unterbau (2) verbunden ist, wobei die Relativposition zwischen Anlenkpunkt und Massekörper bzw. Unterbau (2) mittels zumindest eines im Wesentlichen linear wirkenden, zwischen Anlenkpunkt und Massekörper bzw. Unterbau (2) angeordneten Aktuators (11) verstellbar ist, wobei die Querschubstreben (7, 8) längenkonstant ausgebildet sind.

2. Aufhäugunsgseinrichting nach Anspruch 1,
**dadurch gekennzeichnet,**
**dass** der Aktuator (11) mittels eines im Wesentlichen senkrecht zur Wirkungsrichtung des Aktuators angeordneten Hebelarms (12) an den zumindest einen Anlenkpunkt (A, B, C, D, E, G) des Wattgestänges angebunden ist.

3. Aufhängungseinrichtung nach Anspruch 1 oder 2,
**dadurch gekennzeichnet,**
**dass** die Wirkungsrichtung des zumindest einen Aktuators (11) im Wesentlichen senkrecht zur Garadführungsrichtung (V) des zumindest einen Wattgestänges (A, B, C, D, E) verläuft.

4. Aufhängungseinrichtung nach einem der Ansprüche 1 bis 3,
**dadurch gekennzeichnet,**
**dass** zumindest ein Anlenkpunkt (A, E) des zumindest einen Wattgestänges (A, B, C. D, E) elastisch mit Massekörper bzw. Unterbau (2) verbunden ist, wobei der zumindest eine Aktuator (11) zwischen dem zumindest einen Anlenkpunkt (A, E) und dem Massekörper bzw. dem Unterbau (2) angeordnete ist.

5. Aufhängungseinrichtung nach Anspruch 4,
**dadurch gekennzeichnet,**
**dass** die elastische Verbindung zwischen dem Anlenkpunkt (A, E) des mit dem Aktuator (11) verbundenen Wattgestänges (A, B, C, D, E) und dem Massekörper bzw. Unterbau (2) unterschiedliche Federkonstanten in zumindest zwei unterschiedliche Raumrichtungen (H, V) aufweist.

6. Aufhängungseinrichtung nach einem der Ansprüche 1 bis 5,
**dadurch gekennzeichnet,**
**dass** die Wattgestängeanordnung zwei Wattgestänge (A, B, C. D, E) umfasst, wobei die Geradführungsrichtungen (V) der zumindest zwei Wattgestänge (A, B, C, D, E) übereinstimmen, wobei die Wattgestänge (A, B, C, D, E) voneinander entlang der gemeinsamen Geradführungsrichtung (V) beabstandet angeordnet sind, und wobei die Bewegungsebenen der zumindest zwei Wattgestänge (A, B, C, D, E) parallel zueinander verlaufen.

7. Aufhängungseinrichtung nach Anspruch 6,
**dadurch gekennzeichnet,**
**dass** die den Querschubstreben (7, 8) der beiden Wattgestänge (A, B, C, D, E) zugeordneten äußeren Anlenkpunkte (A, E) jeweils paarweise auf einer den beiden Wattgestängen (A, B, C, D, E) gemeinsamen Schwenkachse (A, E) liegen und jeweils paarweise einstückig in Form einer im. Wesentlichen V-förmigen Kombinationsstrebe (15, 16) ausgebildet sind.

8. Aufhängungseinrichtung nach Anspruch 6 oder 7,
**dadurch gekennzeichnet,**
**dass** zwei Anlenkpunkte (A, E) der Wattgestängeanordnung (A, B, C, D, E) mittels zweier Aktuatoren (11) relativbeweglich mit Massekörper bzw.
Unterbau (2) verbunden sind.

9. Aufhängungseinrichtung nach Anspruch 6 oder 7,
**dadurch gekennzeichnet,**
**dass** der Anlenkpunkt (C) des zumindest einen Aktuators (11) an der Wattgestängeanordnung (A, B, C, D. E) mit dem Drehpunkt (C) eines der Watt'schen Lenker (9) der Wattgestängeanordnung (A, B, C, D, E) verbunden ist, wobei die Wirkungsrichtung (H) des zumindest einen Aktuators (11) im Wesentlichen senkrecht zur Geradjführungsrichtung (V) der Wattgestängeanordnung (A, B, C, D, E) verläuft.

10. Aufhängungseinrichtung nach Anspruch 9,
**dadurch gekennzeichnet,**
**dass** genau ein Aktuator (11) vorhanden ist, wobei der Anlenkpunkt (C) des Aktuators (11) an der Wattgestängeanordnung (A, B, C, D, E) mit dem Drebpunkt (C) desjenigen Watt'schen Lenkers (9) der Watlgestängeanordnung (A, B, C, D, E) verbunden ist, welcher den größeren Abstand zum Massekörper aufweist..

11. Aufhängungseinrichtung nach einem der Ansprüche 1 bis 10,
**dadurch, gekennzeichnet,**
**dass** dem Aktuator (11) ein Federelement (19) parallel geschaltet ist.

12. Aufhängungseinrichtung nach einem der Ansprüche 1 bis 11,
**dadurch gekennzeichnet,**
**dass** der zumindest eine Aktuator (11) als passiver, semiaktiver oder aktiver Aktuator ausgebildet ist.

## Claims

1. Suspension device (1) for the sprung suspension of a mass body, in particular of a driver's cab of a heavy goods vehicle, in relation to a substructure (2), in particular in relation to a vehicle chassis, the suspension device (1) having a spring/damper arrangement (4, 5), arranged between the mass body and the substructure (2), for the damping of shocks or vibrations, the suspension device (1) comprising a Watt's linkage arrangement with at least one Watt's linkage (A, B, C, D, E), connecting the mass body and the substructure (2) in a relatively movable manner, for reducing the degrees of freedom of movement of the mass body with respect to the substructure (2),
**characterized in that**
at least one of the articulation points (A, B, C, D, E, G) of the at least one Watt's linkage (A, B, C, D, E) is connected to the mass body or substructure (2) in a relatively movable manner, the relative position between the articulation point and the mass body or substructure (2) being adjustable by means of at least one essentially linearly acting actuator (11) arranged between the articulation point and the mass body or substructure (2), the lateral thrust struts (7, 8) being designed with a constant length.

2. Suspension device according to Claim 1,
**characterized in that**
the actuator (11) is tied to the at least one articulation point (A, B, C, D, E, G) of the Watt's linkage by means of a lever arm (12) arranged essentially perpendicularly to the direction of action of the actuator.

3. Suspension device according to Claim 1 or 2,
**characterized in that**
the direction of action of the at least one actuator (11) runs essentially perpendicularly to the straight-line motion direction (V) of the at least one Watt's linkage (A, B, C, D, E).

4. Suspension device according to one of Claims 1 to 3,
**characterized in that**
at least one articulation point (A, E) of the at least one Watt's linkage (A, B, C, D, E) is connected elastically to the mass body or substructure (2), the at least one actuator (11) being arranged between the at least one articulation point (A, E) and the mass body or the substructure (2).

5. Suspension device according to Claim 4,
**characterized in that**
the elastic connection between the articulation point (A, E) of the Watt's linkage (A, B, C, D, E) connected to the actuator (11) and the mass body or substructure (2) has different spring constants in at least two different spatial directions (H, V).

6. Suspension device according to one of Claims 1 to 5,
**characterized in that**
the Watt's linkage arrangement comprises two Watt's linkages (A, B, C, D, E), the straight-line motion directions (V) of the at least two Watt's linkages (A, B, C, D, E) being identical, the Watt's linkages (A, B, C, D, E) being arranged so as to be spaced apart from one another along the common straight-line motion direction (V), and the movement planes of the at least two Watt's linkages (A, B, C, D, E) running parallel to one another.

7. Suspension device according to Claim 6,
**characterized in that**
the outer articulation points (A, E) assigned to the lateral thrust struts (7, 8) of the two Watt's linkages (A, B, C, D, E) lie in each case in pairs on a pivot axis (A, E) common to the two Watt's linkages (A, B, C, D, E) and are in each case produced in pairs in one piece in the form of an essentially V-shaped combination strut (15, 16).

8. Suspension device according to Claim 6 or 7,
**characterized in that**
two articulation points (A, E) of the Watt's linkage arrangement (A, B, C, D, E) are connected to the mass body or substructure (2) in a relatively movable manner by means of two actuators (11).

9. Suspension device according to Claim 6 or 7,
**characterized in that**
the articulation point (C) of the at least one actuator (11) on the Watt's linkage arrangement (A, B, C, D, E) is connected to the centre of rotation (C) of one of the Watt's links (9) of the Watt's linkage arrangement (A, B, C, D, E), the direction of action (H) of the at least one actuator (11) running essentially perpendicularly to the straight-line motion direction (V) of the Watt's linkage arrangement (A, B, C, D, E).

10. Suspension device according to Claim 9,
**characterized in that**
exactly one actuator (11) is present, the articulation point (C) of the actuator (11) on the Watt's linkage arrangement (A, B, C, D, E) being connected to the centre of rotation (C) of that Watt's link (9) of the Watt's linkage arrangement (A, B, C, D, E) which is at the greater distance from the mass body.

11. Suspension device according to one of Claims 1 to 10,
**characterized in that**
a spring element (19) is connected in parallel to the actuator (11).

12. Suspension device according to one of Claims 1 to 11,
**characterized in that**
the at least one actuator (11) is designed as a passive, semi-active or active actuator.

## Revendications

1. Dispositif de suspension (1) pour la suspension à ressort d'un corps de masse, notamment d'une cabine de conducteur d'un véhicule poids-lourd, par rapport à une sous-structure (2), en particulier par rapport à un châssis du véhicule, le dispositif de suspension (1) présentant un agencement ressort/amortisseur (4, 5) disposé entre le corps de masse et la sous-structure (2), pour l'amortissement de chocs ou de vibrations, le dispositif de suspension (1) comprenant un agencement de parallélogramme de Watt avec au moins un parallélogramme de Watt (A, B, C, D, E) reliant le corps de masse et la sous-structure (2) de manière mobile l'un par rapport à l'autre, pour réduire les degrés de liberté de mouvement du corps de masse par rapport à la sous-structure (2),
**caractérisé en ce**
**qu'**au moins l'un des points d'articulation (A, B, C, D, E, G) de l'au moins un parallélogramme de Watt (A, B, C, D, E) est connecté de manière relativement mobile au corps de masse ou à la sous-structure (2), respectivement, la position relative entre le point d'articulation et le corps de masse ou la sous-structure (2) pouvant être réglée au moyen d'au moins un actionneur (11) agissant de manière essentiellement linéaire, disposé entre le point d'articulation et le corps de masse ou la sous-structure (2), respectivement, les jambes de force transversales (7, 8) étant réalisées avec une longueur constante.

2. Dispositif de suspension selon la revendication 1,
**caractérisé en ce que**
l'actionneur (11) est relié, au moyen d'un bras de levier (12) disposé essentiellement perpendiculairement à la direction d'action de l'actionneur, à l'au moins un point d'articulation (A, B, C, D, E, G) du parallélogramme de Watt.

3. Dispositif de suspension selon la revendication 1 ou 2,
**caractérisé en ce que**
la direction d'action de l'au moins un actionneur (11) s'étend essentiellement perpendiculairement à la direction de guidage rectiligne (V) de l'au moins un parallélogramme de Watt (A, B, C, D, E).

4. Dispositif de suspension selon l'une quelconque des revendications 1 à 3,
**caractérisé en ce**
**qu'**au moins un point d'articulation (A, E) de l'au moins un parallélogramme de Watt (A, B, C, D, E) est connecté élastiquement au corps de masse ou à la sous-structure (2), respectivement, l'au moins un actionneur (11) étant disposé entre l'au moins un point d'articulation (A, E) et le corps de masse ou la sous-structure (2), respectivement.

5. Dispositif de suspension selon la revendication 4,
**caractérisé en ce que**
la connexion élastique entre le point d'articulation (A, E) du parallélogramme de Watt (A, B, C, D, E) connecté à l'actionneur (11) et le corps de masse ou la sous-structure (2), respectivement, présente différentes constantes de ressort dans au moins deux directions spatiales différentes (H, V).

6. Dispositif de suspension selon l'une quelconque des revendications 1 à 5,
**caractérisé en ce que**
l'agencement de parallélogramme de Watt comprend deux parallélogrammes de Watt (A, B, C, D, E), les directions de guidage rectiligne (V) des au moins deux parallélogrammes de Watt (A, B, C, D, E) coïncidant, les parallélogrammes de Watt (A, B, C, D, E) étant disposés de manière espacée l'un de l'autre le long de la direction de guidage rectiligne commune (V), et les plans de déplacement des au moins deux parallélogrammes de Watt (A, B, C, D, E) s'étendant parallèlement l'un à l'autre.

7. Dispositif de suspension selon la revendication 6,
**caractérisé en ce que**
les points d'articulation extérieurs (A, E) associés aux jambes de force transversales (7, 8) des deux parallélogrammes de Watt (A, B, C, D, E) se situent à chaque fois par paire sur un axe de pivotement (A, E) commun aux deux parallélogrammes de Watt (A, B, C, D, E) et sont réalisés à chaque fois par paire d'une seule pièce sous la forme d'une jambe combinée (15, 16) essentiellement en forme de V.

8. Dispositif de suspension selon la revendication 6 ou 7,
**caractérisé en ce que**
deux points d'articulation (A, E) de l'agencement de parallélogramme de Watt (A, B, C, D, E) sont connectés au moyen de deux actionneurs (11) de manière relativement mobile au corps de masse ou à la sous-structure (2), respectivement.

9. Dispositif de suspension selon la revendication 6 ou 7,
**caractérisé en ce que**
le point d'articulation (C) de l'au moins un actionneur (11) est connecté au niveau de l'agencement de parallélogramme de Watt (A, B, C, D, E) au centre de rotation (C) de l'un des bras oscillants de Watt (9) de l'agencement de parallélogramme de Watt (A, B, C, D, E), la direction d'action (H) de l'au moins un actionneur (11) s'étendant essentiellement perpendiculairement à la direction de guidage rectiligne (V) de l'agencement de parallélogramme de Watt (A, B, C, D, E).

10. Dispositif de suspension selon la revendication 9,
**caractérisé en ce**
**qu'**il est prévu exactement un actionneur (11), le point d'articulation (C) de l'actionneur (11) étant connecté au niveau de l'agencement de parallélogramme de Watt (A, B, C, D, E) au centre de rotation (C) du bras oscillant de Watt (9) de l'agencement de parallélogramme de Watt (A, B, C, D, E) qui présente la plus grande distance au corps de masse.

11. Dispositif de suspension selon l'une quelconque des revendications 1 à 10,
**caractérisé en ce**
**qu'**un élément de ressort (19) est monté parallèlement à l'actionneur (11).

12. Dispositif de suspension selon l'une quelconque des revendications 1 à 11,
**caractérisé en ce que**
l'au moins un actionneur (11) est réalisé sous forme d'actionneur passif, semi-actif ou actif.
